# EUROPÄISCHE PATENTANMELDUNG

(11) **EP 0 917 147 A2**
(43) Veröffentlichungstag der Anmeldung: **19.05.1999**
(21) Anmeldenummer: 97119673.8
(22) Anmeldetag: 11.11.1997
(51) Int. Cl.: G11B 27/02

(54) **Verfahren und Vorrichtung zur Steuerung eines Daten-Zwischenspeichers**

(71) Anmelder: DEUTSCHE THOMSON-BRANDT GMBH, 78048 Villingen-Schwenningen (DE)
(72) Erfinder: Ostermann, Ralf, 30451 Hannover (DE)
(74) Vertreter: Hartnack, Wolfgang, Dipl.-Ing.

(57) **Zusammenfassung**

Beim Wiedergeben optischer Platten wird ein Datenstrom mit einer bestimmten ersten momentanen Datenrate erzeugt. Die Weiterverarbeitung der gespeicherten Nutzinformation erfolgt mit einer zweiten momentanen Datenrate, die mit der ersten Datenrate nicht übereinstimmen muß. Um die daraus entstehende Differenz auszugleichen, wird in den vom Pick-Up kommenden Datenstrom ein Track-Zwischenspeicher eingefügt. Jeder an diesen Zwischenspeicher angeschlossene Decoder benötigt aber einen eigenen Bit-Buffer für seinen zu decodierenden Teil-Datenstrom. Man kann ein entsprechendes Umkopieren der Daten im Track-Zwischenspeicher vermeiden, wenn die in den Track-Zwischenspeicher eingeschriebenen Daten mittels einer verketteten Liste direkt von den Decodern verarbeitet werden. Diese verkettete Liste wird von einem Software-Demultiplexer erzeugt.

## Beschreibung

Die Erfindung betrifft ein Verfahren und eine Vorrichtung zur Steuerung eines Daten-Zwischenspeichers, z.B. des Track-Zwischenspeichers in einem DVD-Spieler.

### Stand der Technik

Beim Wiedergeben optischer Platten erzeugt der Pick-Up einen Datenstrom mit einer bestimmten ersten momentanen Datenrate. Die Weiterverarbeitung der gespeicherten Nutzinformation erfolgt mit einer zweiten momentanen Datenrate, die mit der ersten Datenrate nicht übereinstimmen muß.
Um die daraus entstehende Differenz auszugleichen, wird in den vom Pick-Up kommenden Datenstrom ein Track-Zwischenspeicher eingefügt.

### Erfindung

Wie oben erläutert, muß der Track-Zwischenspeicher unterschiedliche momentane oder kurzfristige Datenraten ausgleichen. Eine weitere Erfordernis ist es, die entsprechenden Daten aus dem Datenstrom dem jeweils zugehörigen Decoder zuzuweisen bzw. den Datenstrom zu demultiplexen. Die Eingangs-Datenpakete können z.B. eine andere Länge oder Datenanordnung haben als die vom Decoder verarbeitbaren Datenpakete. Der bzw. die Decoder benötigen einen eigenen Bit-Buf-fer. Heutige Geräte-Architekturen verlangen einen Decoder-Bit-Buffer, der aus einem einzigen zusammenhängenden Speicherbereich besteht. Um diese Forderung zu erfüllen, müssen die Daten, nachdem sie bereits im Track-Zwischenspeicher zum Zweck des DatenratenAusgleichs gespeichert wurden - eventuell innerhalb des gleichen physikalischen Speichers - noch einmal umkopiert und neu zugewiesen werden, um danach als Bit-Buffer für den jeweiligen Decoder zur Verfügung zu stehen.
Jede Kopieroperation verringert aber die insgesamt zur Verfügung stehende Leistungsfähigkeit der beteiligten Komponenten. Zum einen wird die CPU (central processing unit) belastet, die die Kopieroperation verwaltet. Zum anderen reduziert die Kopieroperation die verbleibende Speicher-Band-breite.

Der Erfindung liegt die Aufgabe zugrunde, ein Verfahren zur verbesserten Steuerung eines Track-Zwischenspeichers anzugeben. Diese Aufgabe wird durch das in Anspruch 1 angegebene Verfahren gelöst.

Der Erfindung liegt die weitere Aufgabe zugrunde, eine Vorrichtung zur Anwendung des erfindungsgemäßen Verfahrens anzugeben. Diese Aufgabe wird durch die in Anspruch 5 angegebene Vorrichtung gelöst.

Wenn in einem DVD-Spieler (digital versatile disc) z.B. der Video- oder Audio-Decoder und die den Track-Zwischenspeicher steuernde CPU (central processing unit) einen gleichen Adressraum zur Verfügung haben, d.h. der oder die Decoder-Bit-Buffer in den CPU-Adressraum gemappt ist bzw. sind, ist daher die resultierende Lösung nicht besonders effizient.
Man kann nun aber das Umkopieren der Daten im Track-Zwischenspeicher vermeiden, wenn die erstmalig in den Track-Zwischenspeicher eingeschriebenen Daten mittels einer verketteten Liste direkt von dem Decoder oder den Decodern verarbeitet werden. Diese verkettete Liste wird von einem Software-Demultiplexer erzeugt. Außerdem werden die Decoder modifiziert.
Statt eines Daten-Decoders kann auch ein Ausgangs-Interface zum Einsatz kommen, bei dem ebenfalls die Daten in einer bestimmten Reihenfolge und zu einem bestimmten Zeitpunkt vorliegen müssen.

Im Prinzip besteht das erfindungsgemäße Verfahren darin, daß in einen Daten-Zwischenspeicher ein Eingangs-Datenstrom eingeschrieben wird und der so gesteuert wird, daß mindestens ein aus dem Eingangs-Datenstrom abgeleiteter Ausgangs-Daten-strom ausgelesen und in einem zu dem jeweiligen Ausgangs-Datenstrom gehörenden Daten-Decoder weiterverarbeitet wird, wobei die Daten für einen Daten-Decoder im Ausgangs-Daten-Strom in einer gegenüber dem Eingangs-Datenstrom möglicherweise unterschiedlichen Reihenfolge und/oder Zusammenfassung zur Verfügung stehen müssen, und wobei die zu dem jeweiligen Ausgangs-Datenstrom gehörenden Daten mittels einer von einem entsprechenden Demultiplexer generierten verketteten Liste aus dem in den Daten-Zwischenspeicher eingeschriebenen Eingangs-Datenstrom für den oder die Daten-Decoder bereitgestellt werden.
Die unterschiedliche Reihenfolge und/oder Zusammenfassung der Daten kann z.B. für die Darstellung bei Trickmodi erforderlich sein.

Vorteilhafte Weiterbildungen des erfindungsgemäßen Verfahrens ergeben sich aus den zugehörigen abhängigen Ansprüchen.

Im Prinzip betrifft die Erfindung eine Vorrichtung mit einem Daten-Zwischenspeicher, in den mittels eines Eingangs-DMA-Controllers ein Eingangs-Datenstrom eingeschrieben wird und von dem mindestens ein aus dem Eingangs-Datenstrom abgeleiteter Ausgangs-Datenstrom ausgelesen und in einem zu dem jeweiligen Ausgangs-Datenstrom gehörenden Daten-Decoder weiterverarbeitet wird, wobei die Daten für einen Daten-Decoder im Ausgangs-Datenstrom in einer gegenüber dem Eingangs-Datenstrom möglicherweise unterschiedlichen Reihenfolge und/oder Zusammenfassung zur Verfügung stehen müssen, und wobei die zu dem jeweiligen Ausgangs-Datenstrom gehörenden Daten mittels einer von einem entsprechenden Demultiplexer generierten verketteten Liste aus dem in den Daten-Zwischen-speicher eingeschriebenen Eingangs-Datenstrom für den oder die Daten-Decoder bereitgestellt werden.

Vorteilhafte Weiterbildungen der erfindungsgemäßen Vorrichtung ergeben sich aus den zugehörigen abhängigen Ansprüchen.

### Zeichnungen

Anhand der Zeichnungen sind Ausführungs-Beispiele der Erfindung beschrieben. Diese zeigen in:
- Fig. 1: vereinfachtes Blockschaltbild eines DVD-Spielers;
- Fig. 2: verbesserte Steuerung des Track-Zwischenspeichers aus Fig. 1;
- Fig. 3: Anwendung einer verketteten Liste.

### Ausführungs-Beispiele

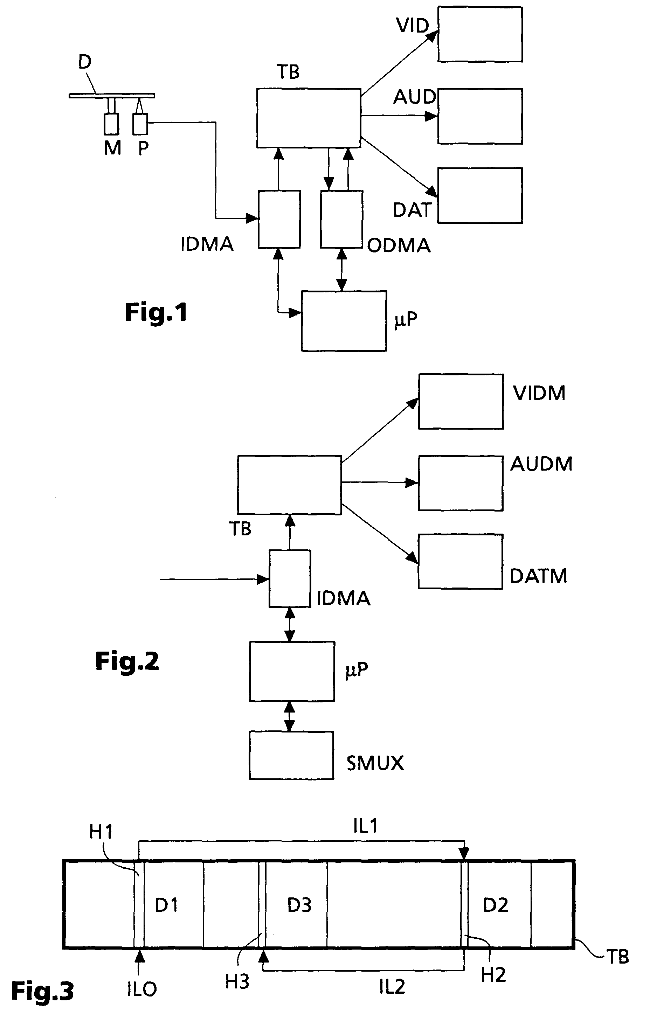

Fig. 1 zeigt eine optische Platte D, die von einem Motor M angetrieben wird und von der Daten mittels eines Pick-Ups P gelesen werden. Diese Daten werden in aufbereiteter Form, z.B. nach einer Verstärkung und Fehlerkorrektur, über einen Eingangs-DMA-Controller (direct memory access) IDMA dem Track-Zwischenspeicher TB zugeführt. Dort werden sie zwischengespeichert, um wie oben beschrieben unterschiedliche momentane oder kurzfristige Datenraten auszugleichen. Die entsprechenden Teil-Datenströme des zwischengespeicherten Datenstroms werden aus dem Track-Zwischenspeicher jeweils in einen zugehörigen Decoder-Bitbuffer umkopiert. Dabei kann es sich beispielsweise um einen Video-, Audio-, Sub-Picture-, und/oder Daten-Decoder DAT handeln. Der Video-Decoder VID kann ein MPEG-Videodecoder sein. Der Audio-Decoder AUD kann ein MPEG- oder AC3-Audiodecoder sein. Statt einem Daten-Decoder kann auch ein Ausgangs-Interface zum Einsatz kommen.
Derartige Decoder benötigen aber einen eigenen Bit-Buffer, um zu bestimmten Zeitpunkten auf bestimmte Daten in bestimmter Reihenfolge zuzugreifen. Die Daten für einen Daten-Decoder müssen also im Ausgangs-Datenstrom in einer gegenüber dem Eingangs-Datenstrom möglicherweise unterschiedlichen Reihenfolge und/oder Zusammenfassung zur Verfügung stehen.
Da wie bereits oben erwähnt heutige Geräte-Architekturen einen Decoder-Bitbuffer verlangen, der aus einem einzigen zusammenhängenden Speicherbereich besteht, werden die zunächst im Track-Zwischenspeicher gespeicherten Daten mittels eines Ausgangs-DMA-Controllers ODMA in der benötigten Reihenfolge und zum benötigten Zeitpunkt in den Bit-Buffer für den jeweiligen Decoder umkopiert.
Der Eingangs-DMA-Controller IDMA und der Ausgangs-DMA-Controller ODMA werden von einem gemeinsamen Prozessor µP oder von zwei getrennten Prozessoren gesteuert.

Man kann das Umkopieren der Daten vom Track-Zwischenspeicher TB in die Decoder-Bitbuffer vermeiden, wenn die erstmalig in den Track-Zwischenspeicher eingeschriebenen Daten mittels einer verketteten Liste direkt von dem Decoder oder den Decodern VID, AUD, DAT verarbeitet werden und der Track-Zwischenspeicher TB sowie die Decoder-Bitbuffer in den gleichen physikalischen Speicher gemappt sind.
Fig. 2 zeigt ein entsprechendes Blockschaltbild, in dem gegenüber Fig. 1 der Ausgangs-DMA-Controller ODMA nicht benötigt wird, weil das Umkopieren von Daten von TB in die Decoder-Bitbuffer entfällt. TB, IDMA, VIDM, AUDM und DATM entsprechen prinzipiell Fig. 1. TB kann allerdings eine geringere Speicher-Bandbreite haben.

Die verkettete Liste nach Fig. 3 wird von einem Software-Demultiplexer SMUX erzeugt, der als zum Prozessor µP zugehörig gedacht werden kann. Der Track-Zwischenspeicher TB hat beispielsweise eine Größe von 200kByte. Die Daten in dem vom Pick-Up P kommenden Datenstrom können z.B. in Daten-Sektoren einer Länge von 2048Byte organisiert sein und werden durch IDMA in einen noch freien Bereich von TB geschrieben. Ein solcher freier Bereich von TB ist z.B. dadurch frei, daß vorher Daten aus diesem Bereich in einem der Decoder decodiert wurden. Nachdem die Daten-Portionen D1, D2, D3 bzw. Daten-Sektoren, die im Vergleich zur Größe von TB vorzugsweise relativ klein sind, in den Speicher TB geladen wurden, erzeugt SMUX unter Berücksichtigung von in D1, D2, D3 enthaltenen Header-Informationen jeweils Verwaltungs-Daten H1, H2, H3 für die zugehörige Daten-Portion. Diese Verwaltungs-Daten repräsentieren eine verkettete Liste und geben an, zu welchem der Decoder die jeweilige Daten-Portion gehört und möglicherweise in welcher Reihenfolge und zu welchem Zeitpunkt die Daten aus der jeweiligen Daten-Portion dem Decoder zugeführt werden. IL0 repräsentiert den Start der verketteten Liste mit dem ersten Verwaltungs-Datenpaket H1, zu dem Daten-Portion D1 gehört.
Vorzugsweise am Anfang eines solchen Verwaltungs-Datenpakets H1 ist eine Adresse IL1 angegeben, die auf den Beginn des nächsten Verwaltungs-Datenpakets H2 und damit auf den nächsten Teil der verketteten Liste verweist. Entsprechendes gilt für die Daten-Portionen D2 und D3, Adresse IL2 und Verwaltungs-Datenpaket H3.
Das Ende einer verketteten Liste kann durch eine Ende-Kennung statt einer solchen Adresse oder durch Fehlen einer solchen Adresse angegeben werden.
Nachdem eine Daten-Portion von TB zu dem entsprechenden Decoder weitergegeben wurde, wird mittels der Fortsetzung der verketteten Liste die nächste Daten-Portion ausgewertet.
Zusätzlich sind gegenüber Fig. 1 die Decoder VIDM, AUDM und DATM so modifiziert, daß sie mittels der Adressen IL0, IL1, IL2, ... den Beginn der nächsten zugehörigen Daten-Portion erreichen können und die Ende-Kennung oder die fehlende Adresse und damit das Ende einer verketteten Liste detektieren können. Die Länge einer verketteten Liste hängt z.B. von der Art des codierten Bild-Typs und von der jeweils zusammengehörenden Anzahl von Daten-Sektoren im von IP kommenden Multiplex-Datenstrom ab. Beispielsweise können intraframe-codierte Bilder wesentlich längere verkettete Listen erfordern als intraframe-codierte Bilder.

Die Erfindung erlaubt die Verwendung preiswerterer Speicher, die nur eine geringere Speicher-Bandbreite haben müssen. Die Erfindung erlaubt außerdem, einen dem Speicher zugeordneten Prozessor mit geringerer Leistung zu verwenden.
Vorteilhaft kann die Kapazität des Track-Zwischenspeichers dynamisch an die jeweiligen Anteile von Datensektor-Typen im Datenstrom von IP und an die aktuellen Anforderungen der Decoder angepaßt werden. Es ist keine starre Funktions-Zuweisung zu festgelegten Teil-Bereichen des Track-Zwischenspeichers erforderlich.

Die Erfindung kann in Wiedergabe-Geräten für alle Arten von Speichermedien benutzt werden, insbesondere für optische oder magnetische Speichermedien wie z.B. optische Platten und Magnetbänder, aber auch bei der Übertragung von zu decodierenden Daten, wenn die momentane oder kurzfristige Übertragungs-Datenrate ungleich der momentanen oder kurzfristigen Decodier-Datenrate ist.

Die Erfindung kann auch angewandt werden, wenn die Eingangs-Datenrate nicht variabel ist. Dies ist besonders dann vorteilhaft, wenn ein Software-Demultiplexer verwendet wird, da dieser die Eingangs-Datenpakete nicht on-the-fly verarbeiten kann, sondern diese zunächst als Komplett-Pakete im Speicher liegen müssen.

## Patentansprüche

1. Verfahren zur Steuerung eines Daten-Zwischenspeichers (TB), in den ein Eingangs-Datenstrom eingeschrieben (IDMA) wird und von dem mindestens ein aus dem Eingangs-Datenstrom abgeleiteter Ausgangs-Datenstrom ausgelesen und in einem zu dem jeweiligen Ausgangs-Datenstrom gehörenden Daten-Decoder (VIDM, AUDM, DATM) weiterverarbeitet wird, wobei die Daten für einen Daten-Decoder im Ausgangs-Datenstrom in einer gegenüber dem Eingangs-Daten-strom möglicherweise unterschiedlichen Reihenfolge und/ oder Zusammenfassung zur Verfügung stehen müssen, **dadurch gekennzeichnet**, daß die zu dem jeweiligen Ausgangs-Daten-strom gehörenden Daten mittels einer von einem entsprechenden Demultiplexer generierten verketteten Liste aus dem in den Daten-Zwischenspeicher (TB) eingeschriebenen Eingangs-Datenstrom für den oder die Daten-Decoder bereitgestellt werden.

2. Verfahren nach Anspruch 1, wobei es jeweils einen Ausgangs-Datenstrom für einen Videodaten-Decoder (VIDM) und/oder einen Audiodaten-Decoder (AUDM) und/oder einen Subpicture-Daten-Decoder gibt.

3. Verfahren nach Anspruch 1 oder 2, wobei der Demultiplexer mittels Software realisiert ist.

4. Verfahren nach einem oder mehreren der Ansprüche 1 bis 3, wobei der Eingangs-Datenstrom von einer DVD-Platte stammt.

5. Vorrichtung mit einem Daten-Zwischenspeicher (TB), in den mittels eines Eingangs-DMA-Controllers (IDMA) ein Eingangs-Datenstrom eingeschrieben wird und von dem mindestens ein aus dem Eingangs-Datenstrom abgeleiteter Ausgangs-Datenstrom ausgelesen und in einem zu dem jeweiligen Ausgangs-Datenstrom gehörenden Daten-Decoder (VIDM, AUDM, DATM) weiterverarbeitet wird, wobei die Daten für einen Daten-Decoder im Ausgangs-Datenstrom in einer gegenüber dem Eingangs-Datenstrom möglicherweise unterschiedlichen Reihenfolge und/oder Zusammenfassung zur Verfügung stehen müssen, **dadurch gekennzeichnet**, daß die zu dem jeweiligen Ausgangs-Datenstrom gehörenden Daten mittels einer von einem entsprechenden Demultiplexer generierten verketteten Liste aus dem in den Daten-Zwi-schenspeicher (TB) eingeschriebenen Eingangs-Datenstrom für den oder die Daten-Decoder bereitgestellt werden.

6. Vorrichtung nach Anspruch 5, die einen Videodaten-Decoder (VIDM) und einen Audiodaten-Decoder (AUDM) enthält, insbesondere zusätzlich einen Subpicture-Daten-Decoder.

7. Vorrichtung nach Anspruch 5 oder 6, wobei der Demultiplexer mittels Software realisiert ist.
